# EUROPEAN PATENT SPECIFICATION

(11) **EP 2 226 967 B1**
(45) Date of publication and mention of the grant of the patent: **25.10.2017**
(21) Application number: 07850909.8
(22) Date of filing: 19.12.2007
(51) Int. Cl.: H04L 9/00, H04L 29/06, H04W 12/02

(54) **ENCRYPTION IMPLEMENTATION CONTROL SYSTEM AND ENCRYPTION IMPLEMENTATION CONTROL DEVICES**
VERSCHLÜSSELUNGSIMPLEMENTIERUNGS-STEUERSYSTEM UND VERSCHLÜSSELUNGSIMPLEMENTIERUNGS-STEUERVORRICHTUNGEN
SYSTÈME DE COMMANDE D'EXÉCUTION DE CHIFFREMENT ET APPAREILS DE COMMANDE D'EXÉCUTION DE CHIFFREMENT

(43) Date of publication of application: 08.09.2010
(73) Proprietor: Fujitsu Limited, Kawasaki-shi, Kanagawa 211-8588 (JP)
(72) Inventor: SHINOZAKI, Atsushi, Kawasaki-shi Kanagawa 211-8588 (JP)
(74) Representative: Wilding, Frances Ward
(86) International application number: PCT/JP2007/074439
(87) International publication number: WO 2009/078103

(56) References cited:
- WO-A1-2006/093079
- JP-A- 9 214 556
- JP-A- 10 224 409
- JP-A- 2000 031 980
- JP-A- 2007 036 834
- US-A1- 2007 043 940
- CARNEIRO G ET AL: "CROSS-LAYER DESIGN IN 4G WIRELESS TERMINALS", IEEE WIRELESS COMMUNICATIONS, IEEE SERVICE CENTER, PISCATAWAY, NJ, US, vol. 11, no. 2, April 2004 (2004-04), pages 7-13, XP001196394, ISSN: 1536-1284, DOI: 10.1109/MWC.2004.1295732

## Description

### [Technical Filed]

The present invention relates to an encryption method implemented in an End-to-End (End2End) connection on a wireless network (a mobile communication network) such as a wireless private branch exchange network (wireless LAN: IEEE802.11) and a cellular network (e.g., 3GPP (3rd Generation Partnership Project).

### [Background Art]

A typical wireless network system is exemplified by a network system (a wireless LAN system) using wireless LAN (IEEE 802.11) and the cellular network system (3GPP).

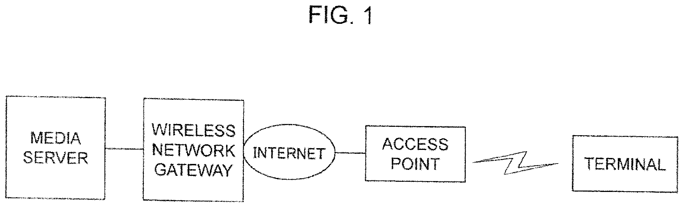

The wireless LAN system is, for example, configured by, as illustrated in FIG. 1, a media server, a wireless network gateway (GW) connected via a link (network) to the media server and an access point (AP) accommodated in the wireless network gateway via an IP network (e.g., the Internet), in which a terminal (such as a PC (Personal Computer) and a PDA (Personal Digital Assistant)) is connected to the AP via a wireless link (a wireless transmission path). A wireless zone of the data transmission path is formed between the AP and the terminal.

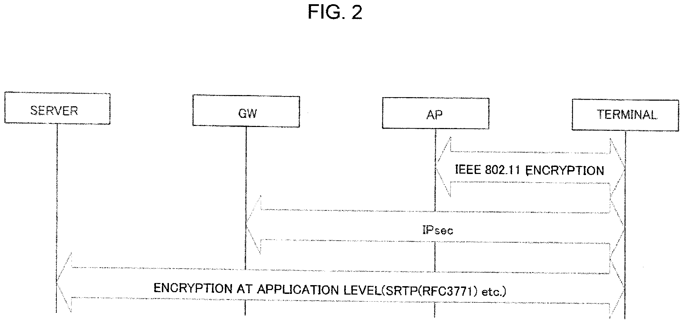

Normally, the communication data is encrypted in a way that takes security of the communication into consideration in the wireless network. In the wireless LAN system as illustrated in FIG. 1, an encryption process based on IEEE 802.11 is, as depicted in FIG. 2, executed in the wireless zone between the terminal and the AP. In the wireless LAN (IEEE 802.11), for example, the encryption based on WPA2 (Wi-Fi Protected Access 2) is carried out by way of the encryption method (using TKIP (Temporal Key Integrity Protocol) or AES (Advanced Encryption Standard) as an encryption algorithm).

Further, for instance, IPsec-based encryption process is executed between the terminal and the GW. Moreover, the encryption at an application level (e.g., SRTP (Secure Real-time Transport Protocol: RFC3771)) is performed between the media server (server) and the terminal.

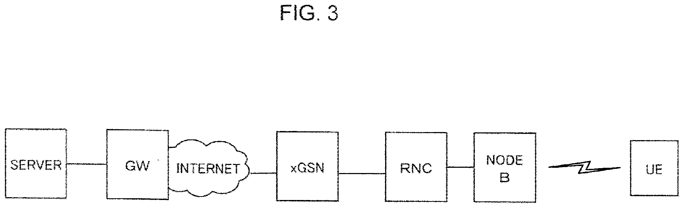

The cellular network system (the mobile telephone network system) includes, for instance, as illustrated in FIG. 3, a server, a gateway (GW: router) connected to the server via the link, an exchange (xGSN) connected to the GW via the IP network such as the Internet, a base station control device (Radio Network Controller: RNC) connected via the link to the exchange, and a base station device (Node B or BTS (Base Transceiver System)) connected to the RNC via the link. A mobile terminal (User Equipment or Mobile Node) is connected to the base station device via a wireless link (wireless transmission path). The wireless zone of the data transmission path is formed between the mobile terminal and the base station device.

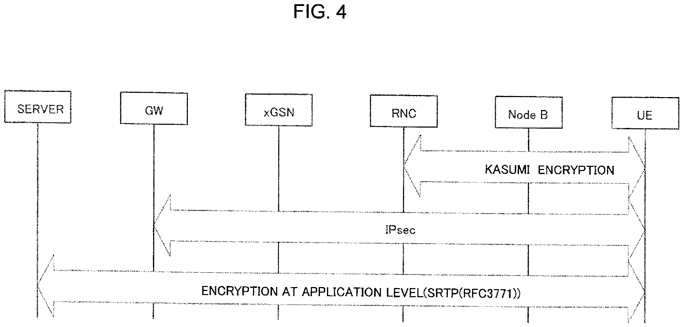

In the case of the cellular network (3GPP) as illustrated in FIG. 3, for instance, the encryption in a KASUMI algorithm F8 mode is, as depicted in FIG. 4, carried out between the RNC and the mobile terminal (UE). The same encryption as by the method illustrated in FIG. 2 can be implemented between the UE and the GW and between the UE and the server.

The encryption method in a status quo, which is applied to the wireless network, is uniquely determined when configuring the wireless zone but is not changed on a per-communication basis.

Execution of streaming distribution having immediacy (real time), which makes the use of the wireless network, generally involves using RTP (Real-Time Transfer Protocol) as a communication protocol. In the case of using RTP, an initial negotiation based on RTSP (Real-Time Transfer Streaming Protocol) is carried out. In addition, the RTCP (RTP control protocol) is used for feeding back the in-communication information on a receiving side. Further, data (multimedia data: RTP packet), which is streaming-distributed, undergoes the encryption process based on a protocol such as SRTP/SRTCP (Secure RTP/Secure Real-time Transport Protocol).

Moreover, when distributing the streaming data to the terminal device within a private exchange network such as a corporate LAN via the wireless network, a VPN (Virtual Private Network) setting is done for providing a secure connection between the terminal device and the GW, and the communication based on IPsec (Security Architecture for Internet Protocol) is concealed as the case may be. Prior art is known from patent document 1: Japanese Patent Laid-Open Publication No. 2005-347789 as well as from patent document 2 US2007043940 A1.

### [Disclosure of the Invention]

### [Problems to be solved by the Invention]

As illustrated in FIGS. 2 and 4, in the wireless zone on the wireless network, in addition to the encryption based on IEEE 802.11, the SRTP-based encryption and/or IPsec-based encryption is carried out. Thus, the encryption is redundantly executed. Therefore, the encryption process becomes redundant. The redundant encryption process exerts a useless load on the device which executes the encryption process, and further it follows that resources are wastefully consumed for the encryption processes.

It is an object of one of aspects of the present invention is to provide a technology of preventing, if the encryption processes become redundant, an unnecessary encryption process from being executed.

### [Means for solving the Problems]

The invention is defined in independent claims 1, 8, and 9.

The one of aspects of the present invention adopts the following means for accomplishing the object described above.

A first aspect of the aspects of the present invention is an encryption execution control system including:
a first encrypting unit to execute encryption of a communication in a first zone between a terminal device and a first relay device;
a second encrypting unit to execute encryption of a communication in a second zone embracing the first zone, the second zone extending from the terminal device via the first relay device to a second relay device; and
a control unit to control the first encrypting unit so that the encryption in the first zone is not executed when executing the encryption in the second zone.

In the first aspect, the control unit may be configured to, when monitoring traffic in the second zone and detecting the traffic for executing the encryption in the second zone, determine that the encryption in the second zone is implemented.

In the first aspect, the first encrypting unit may be configured to, when the encryption in the second zone is executed, become a standby status for starting the encryption in the first zone according to an instruction of which the control means notifies.

In the first aspect, the control unit may be configured to, when detecting that the encryption executed in the second zone is halted, notify the first encrypting unit of an instruction of starting the encryption in the first zone.

In the first aspect, the control unit may be configured to be provided in the first relay device.

In the first aspect, the control means may be configured to be provided in the terminal device.

In the first aspect, the encryption method in the first zone may include applying, e.g., a KASUMI encryption. The encryption method in the second zone may include applying IPsec-based and SRTP-based encryptions.

In the first aspect, the first encrypting unit may be configured to execute the encryption that targets a communication channel for user data and a communication channel for control data in the first zone,
the second encrypting unit may be configured to execute the encryption of the user data forwarded through the second zone, and
the first encrypting unit may be configured to, when the encryption in the second zone is executed, stand by for starting the encryption with respect to the communication channel for the user data in accordance with the instruction given from the control means, while implementing the encryption with respect to the communication channel for the control data.

A second mode is a relay device to relay data, including:
an encryption processing unit to encrypt a communication in a first zone between a self-device and a terminal device; and
a control unit to determine whether the encryption of the communication in the second zone extending from the terminal device via the self-device to another relay device and embracing the first zone is implemented or not, and set, if the encryption in the second zone is implemented, the encrypting unit in a status where the encryption in the first zone is not implemented.

A third mode is a terminal device to perform a communication with another terminal device via two or more relay devices, including:
a first encryption processing unit to encrypt the communication with a first relay device in a first zone between a self-device and the first relay device;
a second encryption processing unit to implement the encryption between the self-device and a second relay device in a second zone extending from the self-device via the first relay device to the second relay device and embracing the first zone; and
a control unit to set, if the encryption in the second zone is implemented, the first encryption processing unit in a status where the encryption in the first zone is not implemented.

The configurations, which can be adopted in the first mode, can be also applied to the second and third modes. Further, the present invention can be also realized by way of the invention of a method having the same features as those in the first through third modes.

### [Effect of the Invention]

According to the modes of the present invention, if the encryption processes become redundant, the unnecessary encryption process can be prevented from being carried out.

### [Brief Description of the Drawings]

[FIG. 1] FIG. 1 illustrates an example of an architecture of a wireless LAN (IEEE802.11.) system.
[FIG. 2] FIG. 2 illustrates an example of an encryption process in the wireless LAN system.
[FIG. 3] FIG. 3 illustrates an example of an architecture of a cellular network (3GPP) system.
[FIG. 4] FIG. 4 illustrates the example of the encryption process in the cellular network system.
[FIG. 5] FIG. 5 illustrates a status where the encryption process in a wireless zone is avoided in the wireless LAN system.
[FIG. 6] FIG. 5 illustrates the status where the encryption process in the wireless zone is avoided in the wireless LAN system.
[FIG. 7] FIG. 7 illustrates an example of an architecture of a network system (encryption process control system) in the embodiment.
[FIG. 8] FIG. 8 illustrates an outline of IPsec.
[FIG. 9] FIG. 9 illustrates a data structure of an ESP bloc.
[FIG. 10] FIG. 10 illustrates a network system architecture related to a specific example and provides an explanation of the encryption process control in a first encryption zone on the basis of determination on a network side.
[FIG. 11] FIG. 11 is a flowchart illustrating a processing example of an encryption processing unit of an RNC.
[FIG. 12] FIG. 12 is a flowchart illustrating a processing example of a determining unit the RNC.
[FIG. 13] FIG. 13 provides an explanation of the encryption process control in the first encryption zone in a case where a terminal device determines whether the encryption process is executed in the second encryption zone or not.
[FIG. 14] FIG. 14 illustrates an outline of the encryption process in a case where DTCH serving as a user channel and DCCH serving as a control channel are provided between the RNC and the UE, i.e., in the first encryption zone.

### [Description of the Reference Numerals and Symbols]

10... transmitting device
20... communication device (second relay device)
21... encryption/decryption processing unit in second encryption zone
30... communication device (first relay device)
31... encryption/decryption processing unit in first encryption zone
32... determining unit to determine whether or not encryption/decryption is executed in first encryption zone
40... terminal device
41... first encryption processing unit
42... second encryption processing unit
50... server
60... gateway (GW)
70... exchange (xGSN)
80... base station control device (RNC)
90... base station device (Node B)
100... terminal device (UE)

### [Best Mode for Carrying out the Invention]

An embodiment of the present invention will hereinafter be described with reference to the drawings. A configuration in the following embodiment is an exemplification, and the present invention is not limited to the configuration in the embodiment.

### <Outline>

As described above, a wireless network system in a status quo involves conducting the redundant encryption. In view of circumstances such as this, by way of the embodiment of the present invention, for instance, each of an access point (AP) and a wireless network gateway (GW) in a wireless LAN (Local Area Network) system as illustrated in FIG. 1 includes a device capable of observing an SRTP negotiation in an End2End (End-to-End: e.g., a media server to a mobile terminal) connection according to RTSP (Real Time Streaming Protocol). At this time, if an SRTP-based encryption process is executed in an RTP session, the encryption process in the wireless LAN (wireless zone) is not executed with respect to this RTP session.

This encryption process is, however, executed independently of other sessions which occur simultaneously with the RTP session and of communications related to other media. For example, such a case exists that a mobile terminal (a terminal device) performs a Web access in parallel with streaming distribution. At this time, if the encryption process in the wireless zone is requested with respect to the session related to this Web access, the encryption process executed in the wireless zone.

Further, the embodiment involves monitoring whether or not IPsec-based encryption process of the communications related to the RTP session is executed and, if executed, avoiding the encryption process in the wireless zone.

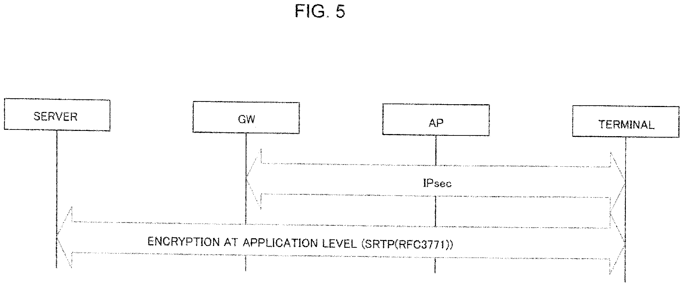

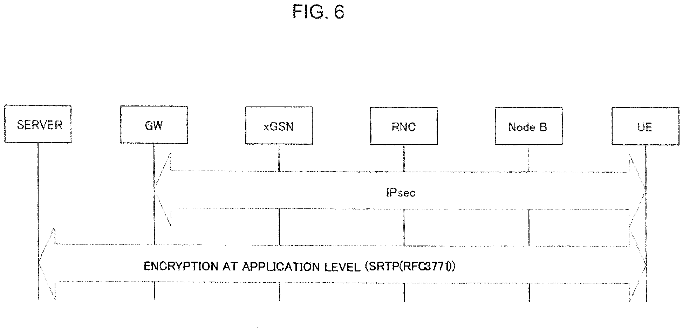

FIG. 5 depicts a status of avoiding the encryption process in the wireless zone in the wireless LAN system as illustrated in FIG. 1, and FIG. 6 depicts a status of avoiding the encryption process in the wireless zone in a cellular network system as illustrated in FIG. 3.

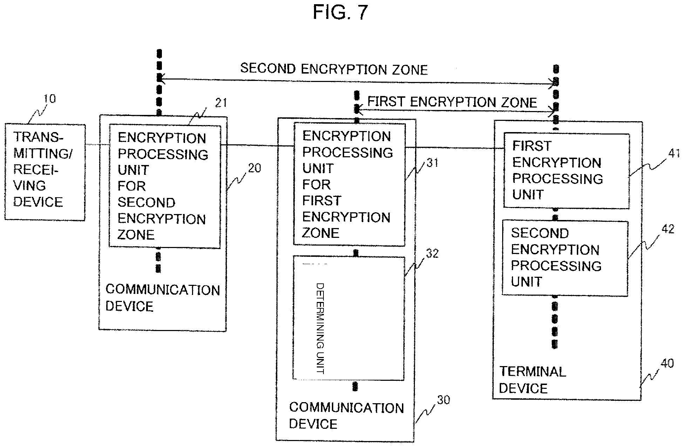

FIG. 7 is a diagram illustrating an example of a network system (encryption process control system) architecture in the embodiment. The network system illustrated in FIG. 7 includes a transmitting/receiving device 10, a communication device 20 serving as a second relay device, a communication device 30 serving as a first relay device and a terminal device 40.

The terminal device 40 has a data transmitting/receiving function, and the data transmitted and received between the terminal device 40 and the transmitting/receiving device 10 passes through a predetermined communication route. One end point of this communication route is the terminal device 40, and the other end point is the transmitting/receiving device 10. The communication device 20 and the communication device 30 are disposed on the communication route, and function as the relay devices of the data transmitted and received between the transmitting/receiving device 10 and the terminal device 40.

On this communication route, a zone between the terminal device 40 and the communication device 30 is defined as a first encryption zone (corresponding to a first zone) in which to encrypt the data transmitted and received in this zone. On the other hand, a zone between the terminal device 40 and the communication device 20 is defined as a second encryption zone (corresponding to a second zone) in which to encrypt the data transmitted and received in this zone.

Thus, the first encryption zone is included (overlapped with) by the second encryption zone. Accordingly, in the case of performing the encrypting communications in both of the first encryption zone and the second encryption zone in parallel, the data flowing through the first encryption zone reaches such a status that encryption data encrypted by an encryption method applied to the second encryption zone is further encrypted by an encryption method applied to the first encryption zone. Namely, the redundant encryption process is executed in the first encryption zone.

Normally, different types of encryption methods are applied to the first encryption zone and the second encryption zone, respectively. It is, however, inevitable that the same type of encryption method is applied to the first and second encryption zones.

The terminal device 40 includes a first encryption processing unit 41 for performing the encryption communications in the first encryption zone and a second encryption processing unit 42 for performing the encryption communications in the second encryption zone.

The communication device 30 includes an encryption processing unit 31 for conducting the encryption communications in the first encryption zone. The encryption processing unit 31 executes a negotiation and an initial setting related to the encryption method (the first encryption method) applied to the first encryption zone with respect to the first encryption processing unit 41 of the terminal device 40, and sets the communication device 30 in a status enabling the execution of the encryption communications based on the first encryption method (in the first encryption zone) between the terminal device 40 and the self-device 30.

In the case of performing the encryption communication in the first encryption zone, one of the communication device 30 and the terminal device 40 transmits the encryption data encrypted by the first encryption method, and the other device decrypts the encryption data.

Thus, the encryption processing unit 31 and the first encryption processing unit 41 function as first encryption means for encrypting the data flowing through the first encryption zone.

The communication device 20 has an encryption processing unit 21 for performing the encryption communications in the second encryption zone. The encryption processing unit 21 executes the negotiation and the initial setting related to the second encryption method applied to the second encryption zone with respect to the second encryption processing unit 42 of the terminal device 40, and provides a status enabling the execution of the encryption communications based on the encryption method (the second encryption method in the second encryption zone.

In the case of performing the encryption communications in the second encryption zone, one of the communication device 20 and the terminal device 40 transmits the encryption data encrypted by the second encryption method, and the other device decrypts the encryption data.

Further, the encryption processing unit 21 and the second encryption processing unit 42 function as a second encryption/decryption means which executes an encryption process and a decryption process in a way that targets the second encryption zone.

The communication device 30 further includes a determining unit 32 which determines whether the encryption is carried out in the second encryption zone or not. The determining unit 32 functions as a control means which controls the execution of the encryption in the first encryption zone, corresponding to the determination of whether the encryption is carried out in the second encryption zone or not.

The determining unit 32 monitors the communication (traffic) between the communication device 20 and the terminal device 40 and thus determines (decides) whether the encryption is executed in the second encryption zone or not.

If the encryption is not executed in the second encryption zone, no particular operation is conducted for the encryption processing unit 31. In this case, the encryption processing unit 31 executes the negotiation and the initial setting related to the encryption in the first encryption zone, and executes the encryption/decryption process of the data transmitted and received through the first encryption zone.

Whereas if the encryption based on the second encryption method is carried out, the determining unit 32 can halt (stop) the encryption process (the encryption/decryption of the data) of the encryption processing unit 31.

Moreover, the determining unit 32 can, if the encryption processing unit 31 is in a status of stopping the encryption in the first encryption zone when detecting that the encryption is stopped in the second encryption zone in monitoring the second encryption zone, get the encryption processing unit 31 to start (resume) the encryption process.

Thus, the encryption in the first encryption zone is executed based on the result of the determination as to whether the encryption is carried out in the second encryption zone or not. Therefore, the determining unit 32 of the communication device 30 checks whether the encryption is conducted in the second encryption zone or not.

The encryption is not performed in the first encryption zone in the case of carrying out the encryption in the second encryption zone, but the encryption is performed in the first encryption zone in the case of not executing the encryption in the second encryption zone. Further, after stopping the encryption in the first encryption zone, in the case of detecting (finding) that the encryption is not performed in the second encryption zone, the encryption starts (resumes) in the first encryption zone.

Herein, with respect to the encryption in the first encryption zone, irrespective of whether the encryption is conducted in the second encryption zone or not, all of the settings necessary for the encryption in the first encryption zone are done, and the start of the encryption in the first encryption zone is suspended.

Moreover, if the first encryption zone includes a communication path (channel) independent of the second encryption zone, for example, in a 3GFP (Third (3rd) Generation Partnership Project) system, in such a case that there exists DCCH (Dedicated Control CHannel) defined as a control channel independent of DTCH (Dedicated Traffic CHannel) for dealing with user data, only the DTCH is set as a control target about the encryption is carried out or not, while the DCCH can be excluded from the control target (the encryption can be executed regardless of the second encryption zone).

Note that FIG. 7 illustrates an example where the communication device 30 is provided with the encryption processing unit 31 and the determining unit 32. The determining unit 32 may, however, be located (e.g., within a device different from the communication device 30) in a position that is physically spaced away from the encryption processing unit 31. Namely, an available configuration is that a start/stop instruction of the encryption process based on the result of the determination made by the determining unit 32 is transmitted to the encryption processing unit 31, and the encryption processing unit 31 executes the encryption process of the data related to the control target communication (traffic) in accordance with the start/stop instruction.

### [Specific Example]

### <Outline of IPsec>

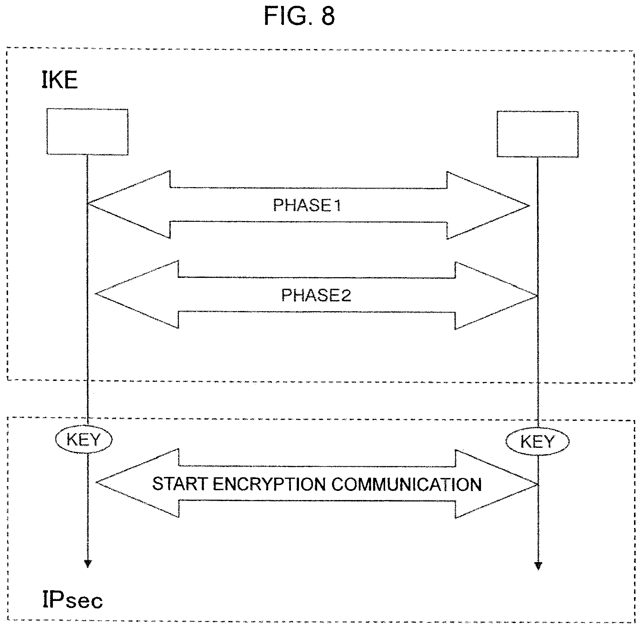

FIG. 8 illustrates an outline of IPsec. According to IPsec, the negotiation about the encryption method is made in IKE (Internet Key Exchange : RFC2409) procedures before starting the communications.

A phase 1 involves determining the encryption method utilized in a phase 2 and generating an encryption key for the encryption between hosts (devices) performing the communications. The encryption key generated in the phase 1 is shared between the devices.

The phase 2 involves determining the encryption method and the encryption key that are employed in IPsec by use of the shared key (a procedure of which is called SA: Security Association). This procedure is conducted by employing a specified packet. For example, a packet based on ISAKMP (Internet Security Association and Key Management Protocol : RFC24C8) is utilized in the phase 2.

Therefore, in the network system illustrated in FIG. 7, for instance, an IKE sequence using the ISAKMP, packet, which is carried out between the communication device 20 and the terminal device 40, can be checked by (the determining unit 32 of) the communication device 30 located in a middle position between these devices 20 and 40.

According to ISAKMP, the IANA (Internet Assigned Number Authority) allocates a port lumber "500" of TCP/UDP (Transfer Control Protocol/User Datagram Protocol).

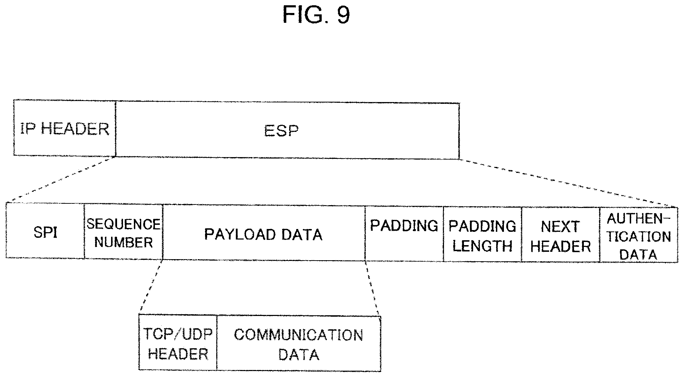

FIG. 9 illustrates a data structure of an ESP bloc. Upon completing the IKE-based negotiation, according to IPsec, a bloc called ESP (Encapsulating Security Payload) is encapsulated with a forwarding target data bloc (which is a TCP/UDP packet in the example of FIG. 9). Namely, the data bloc to be encapsulated is mapped to a payload data storage field in the ESP.

The ESP bloc is attached with an IP header and thus forwarded (the ESP bloc attached with the IP header is referred to as an ESP packet). The payload of the ESP packet, i.e., the ESP bloc, is encrypted based on the IPsec. Hence, the ESP packet is forwarded in a secure environment. Note that a "Next Header field" of the IP header attached to the ESP bloc is stored with a number "50" allocated for the ESP.

IPsec provides a transport mode and a tunnel mode. The transport mode is that the transmission host encrypts a transmission target original data with an encryption key, then attaches the IP header thereto and thus transmits the encrypted data attached with the IP header. This IP packet is received by the reception host. The reception host acquires the original data by removing the IP header from the IP packet and executing a decryption process with respect to the remaining data part (payload).

Thus, in the transport mode, the IP packet containing the encrypted data (the ESP bloc) is transmitted and received between the transmission host and the reception host.

In the tunnel mode, the transmission host forwards the IP packet to a transmission-side gateway. The transmission-side gateway (an IPsec processing gateway) encapsulates the (whole) IP packet (the IP header and the IP payload) by encrypting the IP packet transmitted from the transmission host and forwards the encapsulated IP packet to the reception-side gateway (an IPsec processing gateway). The reception-side gateway acquires the original IP packet by removing the IP header from the IP packet and decrypting the remaining data part. The reception-side gateway forwards this IP packet to the reception host without encrypting the IP packet. Thus, in the tunnel mode, only the communication (traffic) between the gateways is encrypted.

The embodiment is based on the assumption of using the IPsec transport mode.

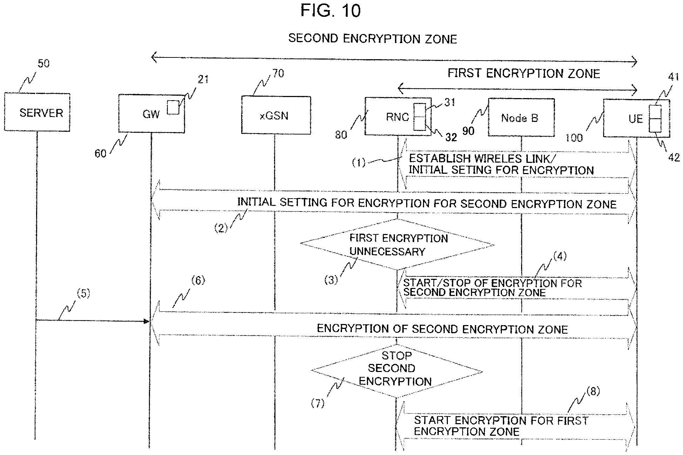

FIG. 10 illustrates a network system architecture related to the specific example and provides an explanation of the encryption process control in the first encryption zone on the basis of the determination on the network side.

As illustrated in FIG. 10, a cellular network system (3GPP) is depicted by way of the system related to the specific example. The cellular network system includes a server 50 which distributes the data such as the streaming data in response to a data request, a gateway (GW) 60 connected via a link to the server, an exchange (xGSN) 70 connected via an IP network (Ex: Internet) to the GW 60, a base station control device (RNC) 80 connected via the link to the xGSN 70 and a base station device (Node B) 90 connected via the link to the RNC 80, and a terminal device (UE: User Equipment) 100 is connected to the base station device 90 via a wireless link (a wireless transmission path).

In FIG. 10, the server 50 and the UE 100 become two end points of the communication route. On this communication route, a zone between the UE 100 and the RNC 80 corresponds to the first encryption zone explained by use FIG. 7, and a zone between the UE 100 and the GW 80 corresponds to the second encryption zone embracing the first encryption zone.

The UE 100 corresponds to the terminal device 40 including the first encryption processing unit 41 and the second encryption processing unit 42 as illustrated in FIG. 7. Further, the RNC 80 corresponds to the communication device 30 including the encryption processing unit 31 and the determining unit 32. Further, the GW 60 corresponds to the communication device 20 including the encryption processing unit 21. Then, the server 50 corresponds to the transmitting device 10 in FIG. 7.

In the first encryption zone, the encryption communication based on a KASUMI algorithm (a customized algorithm of MISTY1) F8 mode (KASUMI encryption: the first encryption method) can be executed between the RNC 80 and the UE 100. Therefore, a process of establishing the communication connection (including the wireless connection) between the RNC 80 and the UE 100 is executed in the first encryption zone. Moreover, the execution of the encryption in the first encryption zone involves executing the negotiation (an exchange of the messages) between the encryption processing unit 31 of the RNC 80 and the first encryption processing unit 41 of the UE 100, and the encryption initial setting corresponding to the result of the negotiation is done in the encryption processing unit 31 of the RNC 80 and the first encryption processing unit 41 of the UE 100, respectively. This scheme enables the encryption communication to be performed in the first encryption zone (FIG. 10(1)).

The encryption communication based on IPsec (the transport mode: the second encryption method) can be executed between the GW 60 and the UE 100 in the second encryption zone. The initial setting executed beforehand for starting the encryption communication based on the second encryption method is conducted through the negotiation (the messages exchange: IKE) executed between the encryption processing unit 21 of the GW 60 and the second encryption processing unit 42 of the UE 100.

The determining unit 32 of the RNC 80 can monitor the traffic in which to implement the negotiation related to the encryption in the second encryption zone. It can be determined based on a result of this observation whether or not the encryption is carried out in the second encryption zone.

For example, the determining unit 32 can detect the traffic related to the encryption negotiation between the GW 60 and the UE 100 from the IP address and the port number of the IP packet passing through the RNC 80. With respect to the information (the IP address etc) for identifying the traffic, the IP address of the GW 60 is previously set in the determining unit 32 of the RNC 80. Further, for instance, on the occasion of the procedure for establishing the connection with the UE 100, the IP address can be acquired from the UE 100.

As described above, according to ISAKMP, the IANA allocates the port number "500" of TCP/UDP. Therefore, the determining unit 32 can determine whether or not the IPsec negotiation is performed or not by checking whether there is the traffic (packet) between the GW 60 having the port number "500" and the UE 100 or not.

Moreover, a number "50" is allocated to a "Next Header Field" of the IP header of the packet that is encrypted based on IPsec. Hence, the determining unit 32 can check whether the packet in the middle of the communication between the GW 60 and the UE 10C is encrypted or not in a way that determines whether the IP packet forwarded between the GW 60 and the UE 100 has the number "50" or not.

The determining unit 32, in the case of having checked the IPsec negotiation (FIG. 10(2)) executed between the encryption processing unit 21 of the GW 60 and the second encryption processing unit 42 of the UE 100 through the traffic observation, determines that the encryption in the first encryption zone is not required (FIG. 10(3)). The determining unit 32 executes the following processes corresponding to the state of the first encryption zone when making the determination such as this.

To be specific, in the case of determining that the encryption in the first encryption zone is not required, under such a state (an encryption start standby status) where the encryption process is not yet started though the initial setting of the encryption process has already been completed, the determining unit 32 instructs the encryption processing unit 31 to maintain the standby status. The encryption processing unit 31 maintains the standby status according to the instruction.

By contrast, the encryption processing unit 31 has already started the encryption, the determining unit 32 instructs the encryption processing unit 31 to halt the encryption. The encryption processing unit 31 halts (stops) the encryption/decryption process according to the halt instruction.

Further, if the initial setting of the encryption in the encryption processing unit 31 is not yet completed, the determining unit 32 instructs the encryption processing unit 31 to halt the start (resumption) of the encryption after completing the initial setting. In this case, the encryption processing unit 31 gets in a start-of-encryption halt status (a start instruction standby status) according to the instruction.

In all cases described above, the determining unit 32 gives the instruction (called a standby instruction) to the encryption processing unit 31 so that the encryption processing unit 31 gets in the start-of-encryption standby status. With this instruction, there occurs the status where the encryption in the first encryption zone is stopped (FIG. 10(4)). When the encryption processing unit 31 stops the encryption, the UE 100 is notified of this stop, and the encryption/decryption process is stopped also in the first encryption processing unit 41 of the UE 100.

By contrast, in the second encryption zone, after completing the initial setting related to this zone, the IPsec-based encryption communication is performed between the encryption processing unit 21 of the GW 60 and the second encryption processing unit 42 of the UE 100. For example, the streaming data (FIG. 10(5)), which is downloaded by the UE 100 from the server 50, undergoes the IPsec-based encryption process (FIG. 10(6)). The encryption (the encryption data) conducted by the encryption processing unit 21 is decrypted by the second encryption processing unit 42 of the UE 100. Therefore, the IPsec-based security is ensured also in the first encryption zone including the wireless link. Thus, the redundant encryption in the first encryption zone can be prevented from being executed.

Thereafter, the determining unit 32 monitors the encryption in the second encryption zone and, when determining that the encryption is halted (FIG. 10(7)), instructs the encryption processing unit 31 to start the encryption, thereby enabling the encryption in the first encryption zone to start (resume). At this time, the first encryption processing unit 41 of the UE 100 is notified of this start. With this scheme, the security in the first encryption zone including the wireless link can be ensured.

The encryption in the second encryption zone is halted in a way that accompanies, e.g., an end of a connection of a virtual private network (VPN) between the UE 100 and the network (GW 60). The determining unit 32 monitors the negotiation between the GW 60 and the UE 100 on the basis of the traffic therebetween, and thus can recognize cancellation of the virtual private network (VPN). Alternatively, it is also feasible to recognize a case in which a destination (address) with respect to the fixed VPN connection is changed.

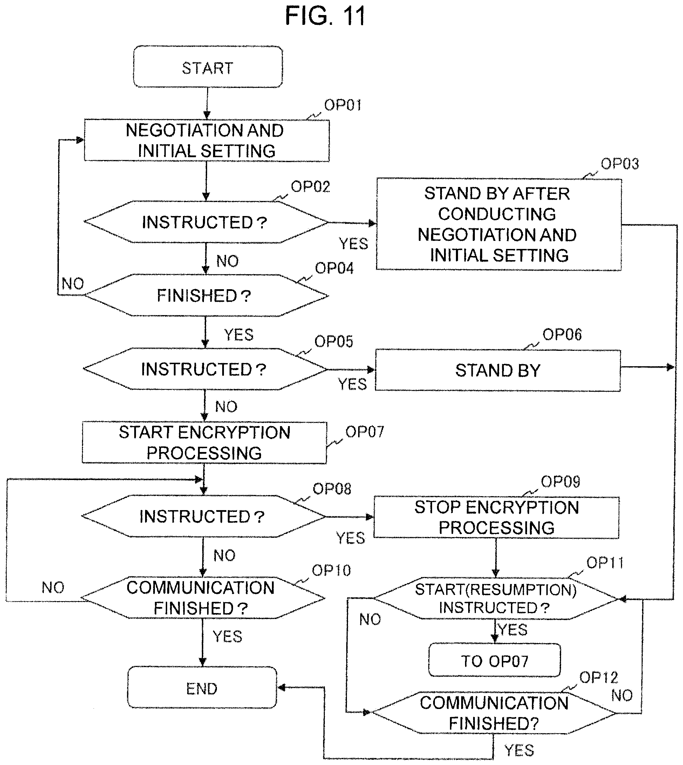

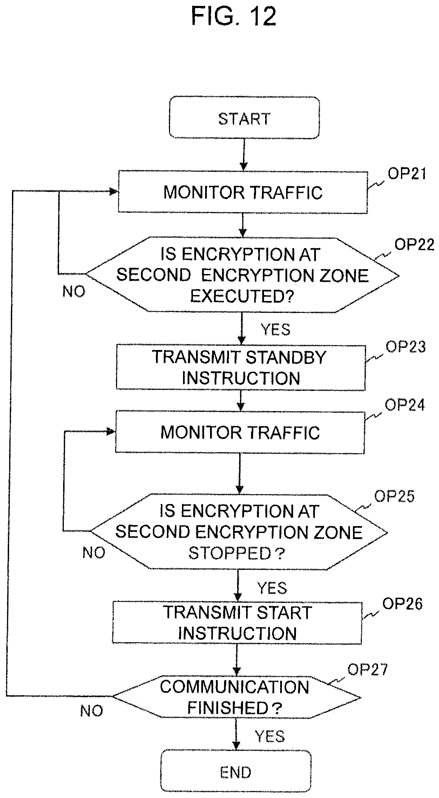

FIG. 11 is a flowchart illustrating a processing example of the encryption processing unit 31 of the RNC 80, and FIG. 12 is a flowchart illustrating a processing example of the determining unit 32 of the RNC 80.

A start of the process depicted in FIG. 11 is triggered by establishing the connection between the RNC 80 and the UE 100 via the base station 90. The encryption processing unit 31 executes the negotiation and the initial setting related to the encryption in the first encryption zone between the first encryption processing unit 41 of the UE 100 and the processing unit 31 itself (OP01).

During this negotiation and the initial setting, the encryption processing unit 31 determines whether the standby instruction is received from the determining unit 32 or not (OP02). In the case of receiving the standby instruction, the encryption processing unit 31, after finishing the negotiation and the initial setting based on a result of the negotiation, reaches the start-of-encryption standby status (OP03).

In contrast with this, in the case of receiving none of the standby instruction, the encryption processing unit 31 determines whether the negotiation and the initial setting are finished or not (OP04) and, if neither the negotiation nor the initial setting is finished, returns the processing to OP01. If the negotiation and the unillustrated are finished, the encryption processing unit 31 determines whether or not the standby instruction is received from the determining unit 32 till the encryption is started (OP05).

At this time, in the case of receiving the standby instruction from the determining unit 32, the encryption processing unit 31 becomes the start-of-encryption standby status (OP06). If the standby instruction is not given till the encryption is started, the encryption processing unit 31 starts the encryption (OP07).

After starting the encryption, the encryption process (encryption/decryption) is executed, during which if the standby instruction is given from the determining unit 32 (OP08; YES), the encryption processing unit 31 halts the encryption process and becomes the start-of-encryption standby status (OP09).

If the standby instruction is not given (OP08; NO), the encryption processing unit 31 determines whether the communication is finished or not (OP10) and, if the communication is finished, executes a predetermined finishing process, thus finishing the process in FIG. 11. Whereas if the communication is not finished, the processing returns to OP08.

Through the processes in OP03, OP06 and OP06, the encryption processing unit 31 becomes the start-of-encryption standby status (an execution-of-encryption suspending status) according to the standby instruction. In this case, the encryption processing unit 31 reaches a standby status for the start-of-encryption instruction (which includes the resumption) given from the determining unit 32 (OP12).

When the start instruction is given from the determining unit 32, the processing advances to OP07, in which the suspending status is canceled, and the encryption process is started. If the start instruction is not given, it is determined whether the communication is finished or not (OP12). At this time, if the communication is not finished, the processing gets back to OF11, and, whereas if the communication is finished, the predetermined finishing process is executed, thus finishing the process in FIG. 11.

A start of the process illustrated in FIG. 12 is triggered by establishing the connection between, e.g., the RNC 80 and the UE 100 via the base station 90. The determining unit 32 monitors the traffic between the GW 60 and the UE 100 (OP21), and determines whether the encryption process related to the second encryption zone is executed or not (OP22).

In the case of executing the encryption process related to the second encryption zone, the determining unit 32 transmits the standby instruction to the encryption processing unit 31 (OP23). With this instruction, the encryption processing unit 31 becomes the standby status for starting the encryption in the first encryption zone.

Thereafter, the determining unit 32 continues to monitor the traffic (OP24), and determines whether the encryption in the second encryption zone is halted or not (OP25) . In the case of halting the encryption, the determining unit 32 transmits the start-of-encryption (including the resumption) instruction in the first encryption zone to the encryption processing unit 31 (OP26). With this instruction, the encryption process in the first encryption zone is started. The first encryption processing unit 41 of the UE 100 is also notified of the encryption stop such as this.

Thereafter, it is determined whether the communication is finished or not (OP27), and, if the communication is not finished, the processing loops back to OP21. Whereas if the communication is finished, the determining unit 32 executes the finishing process as the necessity may arise, thus finishing the process in FIG. 12.

In the examples illustrated in FIGS. 10 through 12, the RCE 80 includes the determining unit 32. In this point, an available configuration is that the terminal device (UE: User Equipment) includes the determining unit 32. Namely, the configuration can be also realized by, when the IPsec-based communications with the network are performed on the side of the terminal device, and notifying the network side of such a purport that the encryption in the first encryption zone is not necessary because of executing the encryption in the second encryption zone. For example, in the case of the cellular network system (3GPP), the terminal device includes a control link (a control channel: DCCH) to the network side. Notification of halting the encryption (e.g., the KASUMI encryption in the first encryption zone can be given via this control channel. A means (mechanism) may be separately provided, which notifies the network-side device (the communication device 30 in FIG. 7) for controlling the first encryption process that the encryption process in the first encryption zone is halted (stopped).

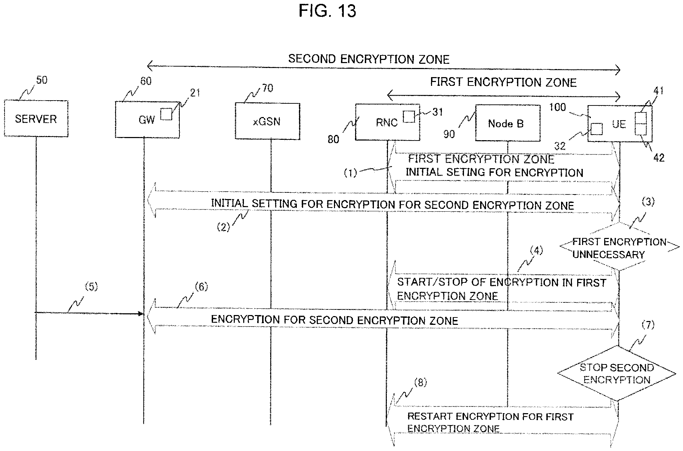

FIG. 13 provides an explanation of the encryption process control in the first encryption zone in a case where the UE 100 serving as the terminal device determines whether the encryption process is executed in the second encryption zone or not.

The cellular network system in FIG. 13 has substantially the same architecture as the system depicted in FIG. 10 has. In this example, however, the UE 100 includes the determining unit 32 which determines whether the encryption in the second encryption zone is executed or not.

In FIG. 13, the UE 100 executes the process of establishing the connection embracing the wireless link and the initial setting of the encryption process in the first encryption zone between the RNC 80 as the network-side device which executes the encryption process in the first encryption zone and the UE 100 itself (FIG. 13(1)).

An assumption is that the negotiation and the initial setting of the encryption process (IPsec) with respect to the second encryption zone are thereafter executed between the GW 60 and the UE 100 (FIG. 13(2)).

The initial setting such as this is done between the encryption processing unit 21 of the GW 60 and the second encryption processing unit 42 of the UE 100. Hence, the determining unit 32 receives the notification of executing the encryption initial setting with respect to the second encryption zone from, e.g., the second encryption processing unit 42, whereby the determining unit 32 can recognize (infer) that the encryption is executed in the second encryption zone (FIG. 13((3)).

Then, the UE 100 notifies the RNC 80 of the start-of-encryption standby instruction (a purport that the encryption process is unnecessary) with respect to the first encryption zone. At this time, for example, the control channel (DCCH) for establishing the connection can be used. The start of the encryption in the first encryption zone is thereby stopped (FIG. 13(4)).

Thereafter, for instance, the UE 100 downloads the data such as the streaming data from the server 50, in which case the data (FIG. 13(5)) forwarded to the UE 100 from the server 50 undergoes the IPsec-based encryption process executed by the encryption processing unit 21 of the GW 60 and is forwarded up to the UE 100. In the UE 100, the second encryption processing unit 42 decrypts the data. Such a process is the same as in the example of FIG. 10.

Thereafter, the UE 100 terminates (disconnects), e.g., the VPN (connection) with the GW 60, thereby enabling the determining unit 32 of the UE 100 to recognize (infer) that the encryption in the second encryption zone is halted (FIG. 13 (7)).

In this case, the UE 100 can notify the encryption processing unit 31 of the RNC 80 of the instruction of starting (resuming) the encryption in the first encryption zone via, e.g., the control channel. With this instruction, the encryption process in the first encryption zone is started (FIG. 13(8)).

Thus, if the terminal device determines whether or not the encryption is executed in the second encryption zone, the terminal device (which is herein the UE 100) functions as a device including a notifying means which notifies the device (which is herein the RNC 80), executing the encryption process in the first encryption zone, of the standby instruction (the stop instruction) of the start of the encryption process and the instruction of the start (resumption) of the encryption process.

The process of the encryption processing unit 31 of the RNC 80 in the example illustrated in FIG. 13 is the same as the process depicted in FIG. 11. The standby instruction and the start (resumption) instruction to be received are, however, the instructions of which the UE 100 notifies the RNC 80.

On the other hand, the process of the determining unit 32 in the UE 100 is the same as the process illustrated in FIG. 12. Namely, the determining unit 32 in the UE 100 can make the determination about the execution and the halt of the encryption in the second encryption zone by monitoring the negotiation (traffic) related to the encryption in the second encryption zone that is executed by the second encryption processing unit 42 in OP21 and OP24.

The determining unit 32, when determining (detecting) that the encryption is executed in the second encryption zone, transmits (notifies the RNC 80 of) the standby instruction of starting the encryption in the first encryption zone to the RNC 80 (OP23). Further, the determining unit 32, when determining (detecting) that the encryption is halted in the second encryption zone, transmits (notifies the RNC 80 of) the instruction of starting (resuming) the encryption in the first encryption zone to the RNC 80 (OP25). The notification of these instructions can be made by use of the control link which connects the UE 100 and the RNC 80 to each other.

Note that the discussion given above has exemplified the data forwarding direction (a downlink direction) from the server 50 down to the UE 100, however, the same process is executed in the data forwarding direction (an uplink direction) from the UE 100 up to the server 50.

By the way, if the communication channel (a user channel such as the DTCH) for the user data and the communication channel (a control channel such as the DCCH) for the control data exist independently by way of the communication route in the first encryption zone, the stop (the standby for the start) of the encryption with respect to the first encryption zone targets only the communication channel (DCCH) for the user data.

The encryption (e.g., the KASUMI encryption) in the first encryption zone is conducted in a way that targets both of the DTCH and the DCCH. By contrast, the IPsec-based encryption executed with respect to the second encryption zone targets only the user data. Hence, the security of the traffic on the DCCH can be ensured by preventing the encryption for the DCCH from being halted.

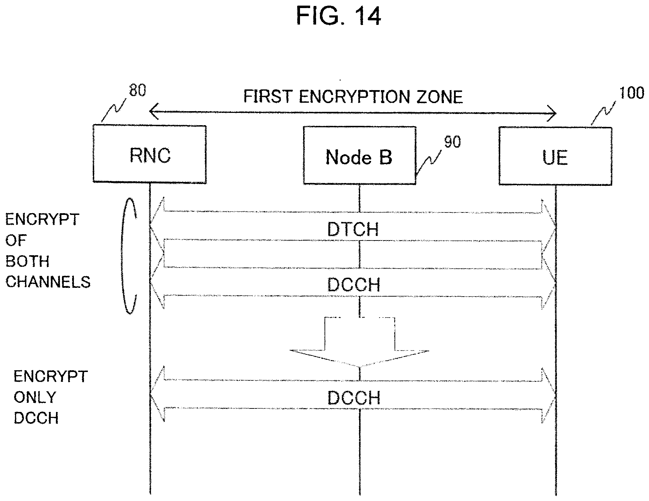

FIG. 14 illustrates an outline of the encryption process in a case where the DTCH serving as the user channel and the DCCH serving as the control channel are provided between the RNC 80 and the UE 100, i.e., in the first encryption zone.

As illustrated in FIG. 14, in the case of executing the encryption process in the first encryption zone, the encryption targeting both of the DTCH and the DCCH is carried out. By contrast, if the encryption process in the first encryption zone is stopped (halted) by the standby instruction, only the DTCH becomes the stop target, while the encryption process for the DCCH is not halted. Hence, the operations in FIG. 10(4) and FIG. 13(4) and the processes in OPs illustrated in FIG. 11, i.e., OP03, OPC6 and OP09 in FIG. 11 are conducted in a way that targets only the DTCH defined as the user channel.

Note that the specific example described above has exemplified the case in which the IPsec is the encryption method carried out in the second encryption zone, however, other encryption methods (e.g., the SRTP) are also available. Moreover, the encryption method executed in the first encryption zone is not limited to the KASUMI encryption.

Further, even in such a case that the wireless network control device is physically separated from the device which executes the encryption process in the first encryption zone, such a mode can be adopted that the wireless network control device monitors whether the second encryption process is executed or not. This is, for example, a case where the RNC 80 includes the determining unit 32, and the base station 90 includes the encryption processing unit 31.

In this instance, in the case of determining from monitoring the traffic in the second encryption zone that the encryption is not performed in the first encryption zone, the RNC 80 notifies the base station 90 that the encryption is not carried out. In this case, the base station 90 controls, in order not to perform the encryption, the terminal device (the UE 100) in a face-to-face relation so that the encryption is not conducted in the first encryption zone. Moreover, the encryption processing unit 31 provided in the base station 90 does not execute its own encryption process.

### <Effect of Embodiment>

According to the embodiment of the present invention, the encryption in the first encryption zone overlapped with the second encryption zone can be stopped corresponding to the encryption in the second encryption zone. Further, the encryption in the first encryption zone can be started (resumed) corresponding to the halt of the encryption in the second encryption zone.

Accordingly, there is no necessity for executing the encryption process with respect to the first encryption zone. Hence, it is possible to restrain influence on a throughput of the network, which leads to improvement of a system capacity. For example, in the case of the cellular network (3GPP) system, the scheme of not executing the encryption process enables a processable connection count to increase. Furthermore, it is feasible to avoid failing to encrypt and to decrypt due to occurrence of desynchronization of the encryption in terms of the encryption process related to the wireless zone in the first encryption zone and to avoid a communication failure based on the failure in the encryption and the decryption. The scheme of not executing the encryption process further enables the power consumption of the device executing the encryption process to be reduced.

## Claims

1. An encryption execution control system comprising:
a first encrypting unit (41) operable to execute encryption of a communication on a traffic channel in a first zone between a terminal device (40) and a first relay device (30);
a second encrypting unit (42) operable to execute the encryption of a communication on the traffic channel in a second zone embracing the first zone, the second zone extending from the terminal device (40) via the first relay device (30) to a second relay device(30); and
a control unit operable to control the first encrypting unit so that encryption of the traffic channel in the first zone is prevented when encryption of the traffic channel in the second zone takes place,
wherein the first zone includes a dedicated control channel for communicating user data independently of the traffic channel, and wherein the dedicated control channel is excluded from control by the control unit.

2. The encryption execution control system according to claim 1, wherein the control unit (32), when monitoring for traffic on the traffic channel in the second zone and after detecting the presence of said traffic for executing the encryption in the second zone, is operable to determine that the encryption in the second zone is executed.

3. The encryption execution control system according to claim 1 or 2, wherein the first encrypting unit (41), when the encryption in the second zone is executed, is operable to become a standby status for starting the encryption for the channel in the first zone according to an instruction of which the control unit (32) notifies.

4. The encryption execution control system according to claim 1, 2 or 3, wherein the control unit (32), when detecting that the encryption executed in the second zone is halted, is operable to notify the first encrypting unit (41) of an instruction of starting the encryption in the first zone.

5. The encryption execution control system according to any preceding claim, wherein the control unit (32) is provided in the first relay device (30) or the terminal device (40).

6. The encryption execution control system according to any preceding claim, wherein the second encrypting unit (42) is operable to execute an IPsec-based or SRTP-based encryption process.

7. The encryption execution control system according to any preceding claim, wherein the first encrypting unit (41) is operable to execute encryption that targets the traffic channel for user data and the control channel for control data in the first zone,
the second encrypting unit (42) is operable to execute the encryption of the user data forwarded on the traffic channel through the second zone, and
wherein the first encrypting unit (41), when the encryption of the traffic channel in the second zone is executed, is operable to stand by for starting the encryption with respect to the traffic channel for the user data in accordance with the instruction given from the control unit, while being further operable to independently execute the encryption with respect to the control channel for the control data.

8. A relay device (30) to relay data, comprising:
an encryption processing unit (31) operable to encrypt a communication on a traffic channel in a first zone between the relay device and a terminal device (40); and
a control unit (32) operable to determine whether the encryption of a communication on the traffic channel in a second zone extending from the terminal device (40) via the relay device to another relay device (20) and embracing the first zone is executed or not, and set, if the encryption of the traffic channel in the second zone is executed, the encrypting unit in a status where the encryption in the first zone is not executed,
wherein the first zone includes a dedicated control channel for communicating user data independently of the traffic channel, and wherein the dedicated control channel is excluded from control by the control unit (32).

9. A terminal device (40) operable to perform a communication with another terminal device (10) via two or more relay devices (10, 20,...), comprising:
a first encryption processing unit (41) operable to encrypt a communication on a traffic channel with a first relay device (30) in a first zone between the terminal device (40) and the first relay device (30);
a second encryption processing unit (42) operable to encrypt a communication on the traffic channel in a second zone extending from the terminal device (40) via the first relay device (30) to the second relay device (20) and embracing the first zone; and
a control unit to set, if encryption of the traffic channel in the second zone is executed, the first encryption processing unit (41) in a status where encryption of the traffic channel in the first zone is not executed,
wherein the first zone further includes a dedicated control channel for communicating user data independently of the traffic channel, and wherein the dedicated control channel is excluded from control by the control unit (32).

## Patentansprüche

1. Steuersystem zum Ausführen einer Verschlüsselung, Folgendes umfassend:
eine erste Verschlüsselungseinheit (41), die funktionsfähig ist, eine Verschlüsselung einer Kommunikation auf einem Verkehrskanal in einer ersten Zone zwischen einem Endgerät (40) und einem ersten Relaisgerät (30) auszuführen,
eine zweite Verschlüsselungseinheit (42), die funktionsfähig ist, die Verschlüsselung einer Kommunikation auf dem Verkehrskanal in einer zweiten Zone auszuführen, welche die erste Zone umspannt, wobei sich die zweite Zone vom Endgerät (40) über das erste Relaisgerät (30) zu einem zweiten Relaisgerät (30) erstreckt, und
eine Steuereinheit, die funktionsfähig ist, die erste Verschlüsselungseinheit derart zu steuern, dass eine Verschlüsselung des Verkehrskanals in der ersten Zone verhindert wird, wenn eine Verschlüsselung des Verkehrskanals in der zweiten Zone stattfindet,
wobei die erste Zone einen fest zugeordneten Steuerkanal zum Kommunizieren von Benutzerdaten unabhängig vom Verkehrskanal beinhaltet und wobei der fest zugeordnete Steuerkanal von der Steuerung durch die Steuereinheit ausgenommen ist.

2. Steuersystem zum Ausführen einer Verschlüsselung nach Anspruch 1, wobei die Steuereinheit (32) funktionsfähig ist, beim Überwachen von Verkehr auf dem Verkehrskanal in der zweiten Zone und nach dem Erkennen des Vorhandenseins des Verkehrs zum Ausführen der Verschlüsselung in der zweiten Zone zu bestimmen, dass die Verschlüsselung in der zweiten Zone ausgeführt wird.

3. Steuersystem zum Ausführen einer Verschlüsselung nach Anspruch 1 oder 2, wobei die erste Verschlüsselungseinheit (41) funktionsfähig ist, in einen Bereitschaftszustand zu gehen, um gemäß einem Befehl, den die Steuereinheit (32) mitteilt, die Verschlüsselung für den Kanal in der ersten Zone zu beginnen, wenn das Verschlüsseln in der zweiten Zone ausgeführt wird.

4. Steuersystem zum Ausführen einer Verschlüsselung nach Anspruch 1, 2 oder 3, wobei die Steuereinheit (32) funktionsfähig ist, der ersten Verschlüsselungseinheit (41) einen Befehl zum Starten der Verschlüsselung in der ersten Zone mitzuteilen, wenn sie erkennt, dass die in der zweiten Zone ausgeführte Verschlüsselung unterbrochen ist.

5. Steuersystem zum Ausführen einer Verschlüsselung nach einem der vorhergehenden Ansprüche, wobei die Steuereinheit (32) im ersten Relaisgerät (30) oder im Endgerät (40) bereitgestellt ist.

6. Steuersystem zum Ausführen einer Verschlüsselung nach einem der vorhergehenden Ansprüche, wobei die zweite Verschlüsselungseinheit (42) funktionsfähig ist, einen IPsecbasierten oder SRTP-basierten Verschlüsselungsprozess auszuführen.

7. Steuersystem zum Ausführen einer Verschlüsselung nach einem der vorhergehenden Ansprüche, wobei die erste Verschlüsselungseinheit (41) funktionsfähig ist, eine Verschlüsselung auszuführen, die auf den Verkehrskanal für Benutzerdaten und den Steuerkanal für Steuerdaten in der ersten Zone abzielt,
die zweite Verschlüsselungseinheit (42) funktionsfähig ist, das Verschlüsseln der Benutzerdaten auszuführen, die auf dem Verkehrskanal durch die zweite Zone weitergeleitet werden, und wobei die erste Verschlüsselungseinheit (41), wenn das Verschlüsseln des Verkehrskanals in der zweiten Zone ausgeführt wird, funktionsfähig ist, gemäß dem Befehl, der von der Steuereinheit gegeben wurde, zum Starten der Verschlüsselung hinsichtlich des Verkehrskanals für die Benutzerdaten bereit zu sein, während sie ferner funktionsfähig ist, die Verschlüsselung hinsichtlich des Steuerkanals für die Steuerdaten unabhängig auszuführen.

8. Relaisgerät (30) zum Weitergeben von Daten, Folgendes umfassend:
eine Verschlüsselungsverarbeitungseinheit (31), die funktionsfähig ist, eine Kommunikation auf einem Verkehrskanal in einer ersten Zone zwischen dem Relaisgerät und dem Endgerät (40) zu verschlüsseln, und
eine Steuereinheit (32), die funktionsfähig ist zu bestimmen, ob die Verschlüsselung einer Kommunikation auf dem Verkehrskanal in einer zweiten Zone, die sich vom Endgerät (40) über das Relaisgerät zu einem weiteren Relaisgerät (20) erstreckt und die erste Zone umspannt, ausgeführt wird oder nicht, und die Verschlüsselungseinheit in einen Zustand zu versetzen, in dem die Verschlüsselung in der ersten Zone nicht ausgeführt wird, wenn die Verschlüsselung des Verkehrskanals in der zweiten Zone ausgeführt wird,
wobei die erste Zone einen fest zugeordneten Steuerkanal zum Kommunizieren von Benutzerdaten unabhängig vom Verkehrskanal beinhaltet und wobei der fest zugeordnete Steuerkanal von der Steuerung durch die Steuereinheit (32) ausgenommen ist.

9. Endgerät (40), funktionsfähig, eine Kommunikation mit einem weiteren Endgerät (10) über zwei oder mehr Relaisgeräte (10, 20,...) auszuführen, Folgendes umfassend:
eine erste Verschlüsselungsverarbeitungseinheit (41), die funktionsfähig ist, eine Kommunikation auf einem Verkehrskanal mit einem ersten Relaisgerät (30) in einer erste Zone zwischen dem Endgerät (40) und dem ersten Relaisgerät (30) zu verschlüsseln,
eine zweite Verschlüsselungsverarbeitungseinheit (42), die funktionsfähig ist, eine Kommunikation auf einem Verkehrskanal in einer zweiten Zone zu verschlüsseln, die sich vom Endgerät (40) über das erste Relaisgerät (30) zum zweiten Relaisgerät (20) erstreckt und die zweite Zone umspannt, und
eine Steuereinheit, um die erste Verschlüsselungsverarbeitungseinheit (41) in einen Zustand zu versetzen, in dem die Verschlüsselung des Verkehrskanals in der ersten Zone nicht ausgeführt wird, wenn die Verschlüsselung des Verkehrskanals in der zweiten Zone ausgeführt wird,
wobei die erste Zone ferner einen fest zugeordneten Steuerkanal zum Kommunizieren von Benutzerdaten unabhängig vom Verkehrskanal beinhaltet und wobei der fest zugeordnete Steuerkanal von der Steuerung durch die Steuereinheit (32) ausgenommen ist.

## Revendications

1. Système de commande d'exécution de cryptage comprenant :
une première unité de cryptage (41) opérationnelle pour exécuter un cryptage d'une communication sur un canal de trafic dans une première zone entre un dispositif terminal (40) et un premier dispositif de relais (30) ;
une seconde unité de cryptage (42) opérationnelle pour exécuter le cryptage d'une communication sur le canal de trafic dans une seconde zone englobant la première zone, la seconde zone s'étendant depuis le dispositif terminal (40) via le premier dispositif de relais (30) jusqu'à un second dispositif de relais (30) ; et
une unité de commande opérationnelle pour commander la première unité de cryptage afin que le cryptage du canal de trafic dans la première zone soit bloqué lorsque le cryptage du canal de trafic dans la seconde zone a lieu,
dans lequel la première zone comprend un canal de commande dédié pour communiquer des données d'utilisateur indépendamment du canal de trafic, et dans lequel le canal de commande dédié est exclu de la commande par l'unité de commande.

2. Système de commande d'exécution de cryptage selon la revendication 1, dans lequel l'unité de commande (32), lors de la surveillance du trafic sur le canal de trafic dans la seconde zone et après détection de la présence dudit trafic pour exécuter le cryptage dans la seconde zone, est opérationnelle pour déterminer que le cryptage dans la seconde zone est exécuté.

3. Système de commande d'exécution de cryptage selon la revendication 1 ou 2, dans lequel la première unité de cryptage (41), lorsque le cryptage dans la seconde zone est exécuté, est opérationnelle pour adopter un état de veille pour démarrer le cryptage pour le canal dans la première zone conformément à une instruction notifiée par l'unité de commande (32).

4. Système de commande d'exécution de cryptage selon la revendication 1, 2 ou 3, dans lequel l'unité de commande (32), lorsqu'il est détecté que le cryptage exécuté dans la seconde zone est arrêté, est opérationnelle pour notifier à la première unité de cryptage (41) une instruction de démarrage du cryptage dans la première zone.

5. Système de commande d'exécution de cryptage selon l'une quelconque des revendications précédentes, dans lequel l'unité de commande (32) est agencée dans le premier dispositif de relais (30) ou le dispositif terminal (40).

6. Système de commande d'exécution de cryptage selon l'une quelconque des revendications précédentes, dans lequel la seconde unité de cryptage (42) est opérationnelle pour exécuter un processus de cryptage basé sur IPsec ou basé sur SRTP.

7. Système de commande d'exécution de cryptage selon l'une quelconque des revendications précédentes, dans lequel la première unité de cryptage (41) est opérationnelle pour exécuter un cryptage qui cible le canal de trafic pour des données d'utilisateur et le canal de commande pour des données de commande dans la première zone,
la seconde unité de cryptage (42) est opérationnelle pour exécuter le cryptage des données d'utilisateur transmises sur le canal de trafic à travers la seconde zone, et
dans lequel la première unité de cryptage (41), lorsque le cryptage du canal de trafic dans la seconde zone est exécuté, est opérationnelle pour se mettre en veille afin de démarrer le cryptage par rapport au canal de trafic pour les données d'utilisateur conformément à l'instruction donnée par l'unité de commande, tout en étant de plus opérationnelle pour exécuter indépendamment le cryptage par rapport au canal de commande pour les données de commande.

8. Dispositif de relais (30) pour relayer des données, comprenant :
une unité de traitement de cryptage (31) opérationnelle pour crypter une communication sur un canal de trafic dans une première zone entre le dispositif de relais et un dispositif terminal (40) ; et
une unité de commande (32) opérationnelle pour déterminer si le cryptage d'une communication sur le canal de trafic dans une seconde zone s'étendant depuis le dispositif terminal (40) via le dispositif de relais jusqu'à un autre dispositif de relais (20) et englobant la première zone est exécuté ou non, et établir, si le cryptage du canal de trafic dans la seconde zone est exécuté, l'unité de cryptage dans un état où le cryptage dans la première zone n'est pas exécuté,
dans lequel la première zone comprend un canal de commande dédié pour communiquer des données d'utilisateur indépendamment du canal de trafic, et dans lequel le canal de commande dédié est exclu de la commande par l'unité de commande (32).

9. Dispositif terminal (40) opérationnel pour effectuer une communication avec un autre dispositif terminal (10) par l'intermédiaire de deux ou plus de deux dispositifs de relais (10,20,...), comprenant :
une première unité de traitement de cryptage (41) opérationnelle pour crypter une communication sur un canal de trafic avec un premier dispositif relais (30) dans une première zone entre le dispositif terminal (40) et le premier dispositif à relais (30) ;
une seconde unité de traitement de cryptage (42) opérationnelle pour crypter une communication sur le canal de trafic dans une seconde zone s'étendant depuis le dispositif terminal (40) via le premier dispositif de relais (30) jusqu'au second dispositif relais (20) et englobant la première zone ; et
une unité de commande pour établir, si le cryptage du canal de trafic dans la seconde zone est exécuté, la première unité de traitement de cryptage (41) dans un état où le cryptage du canal de trafic dans la première zone n'est pas exécuté,
dans lequel la première zone comprend en outre un canal de commande dédié pour communiquer des données d'utilisateur indépendamment du canal de trafic, et dans lequel le canal de commande dédié est exclu de la commande par l'unité de commande (32).
